Europäisches Patentamt

European Patent Office

Office européen des brevets

(11) Publication number: **0 096 318**
**B1**

(12) **EUROPEAN PATENT SPECIFICATION**

(45) Date of publication of patent specification: **04.03.87**

(21) Application number: **83105288.1**

(22) Date of filing: **27.05.83**

(51) Int. Cl.⁴: **G 01 J 3/00, G 01 J 3/10**

(54) **Spectrophotometer operating at discrete wavelengths.**

(30) Priority: **09.06.82 HU 186982**

(43) Date of publication of application:
**21.12.83 Bulletin 83/51**

(45) Publication of the grant of the patent:
**04.03.87 Bulletin 87/10**

(84) Designated Contracting States:
**AT DE FR GB IT SE**

(56) References cited:
**EP-A-0 106 380**
**WO-A-83/03001**
**DD-A- 152 626**
**DE-A-2 453 120**
**DE-B-2 224 536**
**FR-A-1 590 828**

**PROCEEDINGS OF THE NATIONAL ELECTRICAL CONFERENCE; vol. 33, 1979, R.A. SOREF et al.:"Fiber-optic switching techniques", pages 188-193**

(73) Proprietor: **KÖZPONTI ELELMISZERIPARI KUTATO INTEZET**
**Herman Otto ut 15**
**H-1022 Budapest (HU)**

(72) Inventor: **Czabaffy, András**
**Karitnhy Frigyes ut 3032-**
**H-1111 Budapest (HU)**
Inventor: **Horváth, Loránd, Dr.**
**Tusnádi utca 45**
**H-1125 Budapest (HU)**
Inventor: **Kaffka, Károly, Dr.**
**Abel Jenö utca 30**
**H-1113 Budapest (HU)**
Inventor: **Nadai, Béla, Dr.**
**Rács Aladár utca 7**
**H-1121 Budapest (HU)**

(74) Representative: **Kern, Wolfgang, Dipl.-Ing.**
**Patentanwälte et al**
**Dipl.-Ing. Herbert Tischer Dipl.-Ing. Wolfgang Kern Dipl.-Chem. Dr. H.P. Brehm Albert-Rosshaupter-Strasse 65**
**D-8000 München 70 (DE)**

Courier Press, Leamington Spa, England.

## Description

The subject matter of the present invention concerns spectrophotometer operating at discrete wavelengths.

The invention concerns especially such a spectrophotometer of the type comprising several radiation emitting diodes emitting substantially monochromatic radiations of different wavelengths, a holder for supporting said diodes, an optical arrangement for directing the radiations emitted by said diodes successively towards a sample to be tested, a first radiation detector sensing the intensity of the radiation reflected or transmitted by the sample and a signal processing unit connected to the first radiation detector.

Such a spectrophotometer is known from DE—B—2 224 536. By this instrument the radiation of several diodes serving as light sources is successively directed through a lens onto a single detector. The successive operation of the diodes is provided in order to avoid deficiencies between the radiation paths of the diodes.

No measures are provided, however, by which for all diodes the same radiation path and thus the same measuring equipment can be used. Therefore, it is not ensured that always the same part of the sample is tested and the same detector range is used. This might be the reason for errors in measurement. Further errors in measurement may be caused by the instability of the diodes especially in connection with the successive operation of the diodes.

A similar structured spectrophotometer which may have the same deficiencies is disclosed in DD—A—152 626.

Disclosure of the Invention

The object underlying the invention is to provide a spectrophotometer of the above-mentioned type avoiding errors in measurement caused by the use of different successively operated diodes.

This object is solved by a spectrophotometer of the abovementioned type, which is characterized by reflecting means in said optical arrangement, said reflecting means being supported rotatably with respect to the holder, means for changing the angular position of the reflecting means thereby to reflect the radiation of said diodes towards the sample successively, a transducer for providing a signal in at least one angular position of the reflecting means, a beam splitter positioned before the sample in the path of the radiation beam reflected towards the sample, a second radiation detector sensing the intensity of the radiation diverted by the beam splitter, a first analog-to-digital converter to produce a digital signal corresponding to the signal of the first radiation detector, a second analog-to-digital converter to produce a digital signal corresponding to the signal of the second radiation detector, and a data processing unit connected to the output of the first and second analog-to-digital converters, said data processing unit computing spectrum data on basis of the digital signals of said first and second analog-to-digital converters and the signal of said transducer.

By the rotatably mounted reflecting means according to the invention it is possible to provide the same radiation path for measuring for all the diodes. This is provided by the combination of several controlling and regulating elements as claimed. In order to eliminate the errors caused by time dependent instabilities of the successively operated diodes a second detector is provided within a split off from radiation path towards the sample. Control is provided by the fact that the detectors are connected to analog-to-digital converters and by processing the signals of the two detectors and the transducer by the computer. The computer is programmed in such a manner that it finds out the relation between the data which are simultaneously defined by the first and the second analog-to-digital converters.

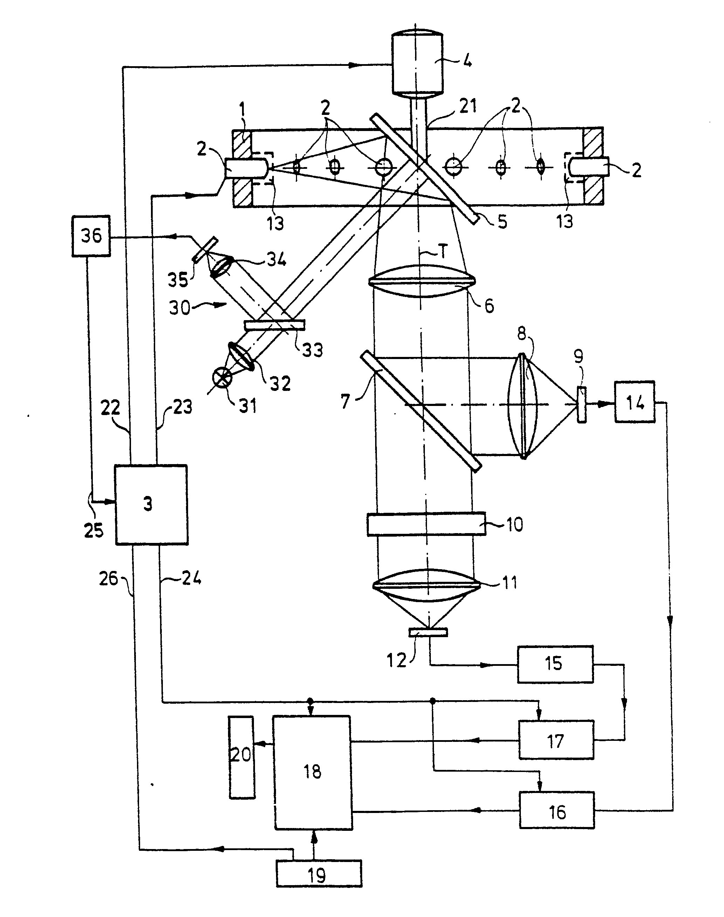

A rotatable reflecting means for reflecting light beams is already known per se from the literature "Proceedings of the National Electrical Conference", Vol. 33, 1979, R. A. Soref et al. "Fiber-optic switching techniques", pages 188—193. This apparatus, however, concerns an optical fiber system with different switching equipments. According to one embodiment of this reference (Fig. 6) such a switch is a rotatable, spherical mirror reflecting the light beam from an optical fiber into adjacent parallel optical fibers.

According to a preferred embodiment of the invention the spectrophotometer further comprises means for operating the diodes corresponding to the angular rotation of the reflecting means, said means for operating said diodes being connected to the transducer.

According to another embodiment of the subject invention the spectrophotometer comprises a stepping motor to rotate the reflecting means, the control input of which is connected to said means for operating said diodes.

In the spectrophotometer according to the invention the transducer preferably provides a signal corresponding to the current angular position of the reflecting means which means are rotated continuously by a motor.

Moreover, according to another preferred embodiment the reflecting means consist of at least one mirror supported rotatably with respect to the holder.

In the spectrophotometer according to the invention the single sources of radiation emitting diodes are preferably solid state radiation emitting diodes or laser diodes. As each of these radiation sources emits in a narrow wavelength range only, the heat generated by the sources within the equipment is small and so the errors due to the temperature changes are also small. The heat generated in the spectrophotometer according to the present invention can be further decreased by switching on at any times that source of radiation only the radiation of which is just to be transmitted by said one or more mirrors. This can be accomplished by a control unit operating the radiation sources, being synchronized with the angular position of the mirror.

Said one or more mirrors may be rotated even by hand or, preferably, by a stepper motor or a conventional electric motor.

An embodiment is extremely preferred wherein the means for operating the diodes and the data processing unit are realized by a microprocessor.

Brief Description of the Drawing

The invention will be described in the following, on the basis of a preferred embodiment illustrated in the accompanying drawing showing a schematic view and block diagram of a spectrophotometer according to the invention.

Modes for carrying out the Invention

In the drawing radiation sources 2, preferably solid state radiation emitting diodes or laser diodes, are mounted in a cylindrical holder 1. Each one of the radiation sources 2 emits a substantially monochromatic radiation at different wavelengths. The monochromatic feature of the radiation can be increased by filters 13 when required, for example by interference filters. The radiation sources 2 are successively operated by control signals from outputs 23 of a control unit 3. The radiation emitted by the radiation source 2 just operating is reflected by a mirror 5 onto a lens 6, said mirror 5 being supported rotatably around an axis T. In the embodiment illustrated the mirror 5 is mounted on the shaft 21 of a motor 4, wherein the motor 4 and the holder 1 are fixed with respect to each other. The motor 4, being a stepping motor, is controlled with pulses or pulse series provided by the control unit 3 on its output 22, synchronized to the signals existing at the outputs 23 for operating the radiation sources 2. The beam of radiation reflected from mirror 5 towards the lens 6 passes through a splitter 7 to the sample 10. The radiation transmitted through the sample 10 is focused by a lens 11 onto a radiation detector 12, the output of which is connected to the analog input of an analog-to-digital converter 17 via an amplifier 15. The portion of the radiation reflected from the splitter 7 is focused by a lens 8 onto a radiation detector 9, the output of which is connected to the analog input of an analog-to-digital converter 16 via an amplifier 14. The control inputs of the analog-to-digital converters 16 and 17 are both connected to the output 24 of the control unit 3. The pulse starting the conversion appears on the output 24 at the moment when the radiation emitted by one of the radiation sources 2 is just projected by the mirror 5 on the sample 10.

The starting position of the mirror 5 is detected by the control unit 3 via a transducer 30 comprising a light source 31, a lens 32 projecting the light of the light source 31 onto the mirror 5 after passing through a beam splitter 33, e.g. a planoparallel plate, and a lens 34 focusing the light reflected from the mirror 5 and the beam splitter 33 on a light detector 35. The output of the light detector 35 is connected to the input 25 of the control unit 3 via an amplifier 36. The transducer 30 transmits a signal to the control unit 3 in a single angular position of the rotating mirror 5. Following this the control unit 3 will generate as many pulses or pulse series as the number of the radiation sources 2 is, resulting in rotating the mirror 5 step by step by means of the stepper motor 4. The pulses starting the analog-to-digital conversions are generated by the control unit 3 on its output 24 corresponding to the pulses operating the radiation sources 2 successively, being generated on the outputs 23.

The digital outputs of the analog-to-digital converters 16 and 17 are connected to a data processing unit 18 being preferably a microprocessor, which receives also the pulses starting the analog-to-digital conversions on the output 24 of the control unit 3.

The data processing unit 18 computes the quotient of the signals measured simultaneously by the analog-to-digital converters 16 and 17 and this quotient is stored at each wavelength. The operator can access to the data processing unit 18 via an operating desk 19, and after the measurement the spectrum can be displayed on a display unit 20. The operating desk 19 is connected also to the starting input 26 of the control unit 3.

The spectrophotometer according to the present invention can be also accomplished different from the embodiment illustrated in the drawing. The radiation sources 2 are mounted on a holder 1 different from that illustrated herein, and which may be for example conical or annular. The essential feature is that the radiation sources 2 should be arranged so as to enable the scanning of them successively by the optical arrangment, e.g. by a rotating mirror system. If the radiation sources 2 are mounted on an annular holder for example so that they radiate upwards in the drawing, an additional mirror is to be attached to the mirror 5 to reflect the beam of radiation directed upwards onto the mirror 5, and both mirrors have to be rotated together for scanning the radiation sources 2. The radiation sources 2 may also be arranged to be scanned with a rotational reciprocating motion of a mirror system. A single rotatably supported concave mirror can also be applied instead of the mirror 5 and the lens 6. The lens 6 can be omitted when the radiation sources 2 emit a parallel beam of radiation. The mirror 5 may also be rotated by a continuously rotating motor 4 instead of a stepping one, and in this case the transducer 30 is an angular position transducer mounted on the shaft 21 to provide a proper signal for the control unit 3 each time when scanning one of the radiation sources 2. It is also possible to rotate the pivoted mirror 5 manually in the course of the measurement, and thus there is no driving motor 4 at all. The transducer 30 sensing the angular position of the mirror 5 can be designed in many different ways, various optical means e.g. angle reflector, chopper disc, electromechanical or magnetic (inductive) transducers or angular position decoders can be applied.

The quotient may also be generated in a way different from that illustrated in the drawing, by means of an analog quotient meter for example connected to the outputs of the amplifiers 15 and 14, or a digital quotient meter connected to the outputs of the analog-to-digital converters 17 and 16. In an extremely preferable embodiment the microprocessor constituting the data processing unit 18 serves also as a control unit 3. The spectrophotometer of the present invention is naturally applicable not only for transmission measurements as illustrated in the drawing but for reflection measurements, too.

**Claims**

1. A spectrophotometer operating at discrete wavelengths comprising several radiation emitting diodes (2) emitting substantially monochromatic radiations of different wavelengths, a holder (1) for supporting said diodes (2), an optical arrangement (5, 6) for directing the radiations emitted by said diodes (2) successively towards a sample (10) to be tested, a first radiation detector (12) sensing the intensity of the radiation reflected or transmitted by the sample (10) and a signal processing unit connected to the first radiation detector (12), characterized by reflecting means (5) in said optical arrangement, said reflecting means (5) being supported rotatably with respect to the holder (1), means for changing the angular position of the reflecting means (5) thereby to reflect the radiation of said diodes (2) towards the sample (10) successively, a transducer (30) for providing a signal in at least one angular position of the reflecting means (5), a beam splitter (7) positioned before the sample (10) in the path of the radiation beam reflected towards the sample (10), a second radiation detector (9) sensing the intensity of the radiation diverted by the beam splitter (7), a first analog-to-digital converter (17) to produce a digital signal corresponding to the signal of the first radiation detector (12), a second analog-to-digital converter (16) to produce a digital signal corresponding to the signal of the second radiation detector (9), and a data processing unit (18) connected to the output of the first and second analog-to-digital converters (17, 16), said data processing unit (18) computing spectrum data on basis of the digital signals of said first and second analog-to-digital converters (17, 16) and the signal of said transducer (30).

2. The spectrophotometer according to claim 1, further comprising means (3) for operating said diodes (2) corresponding to the angular position of said reflecting means (5), said means (3) for operating said diodes (2) being connected to the transducer (30).

3. The spectrophotometer according to claim 2, further comprising a stepping motor (4) to rotate said reflecting means (5), the control input of which is connected to said means (3) for operating said diodes (2).

4. The spectrophotometer according to claim 1 or claim 2, wherein the transducer (30) provides a signal corresponding to the current angular position of said reflecting means (5), and said reflecting means (5) are rotated by a motor (4) continuously.

5. The spectrophotometer according to any of claims 1—4, wherein said reflecting means consist of at least one mirror (5).

6. The spectrophotometer according to claim 2 or claim 3, wherein said means (3) for operating said diodes (2) and said data processing unit (18) is a microprocessor.

7. The spectrophotometer according to any of claims 1 to 6, wherein at least some of said diodes (2) are provided with filters (13).

**Patentansprüche**

1. Spektrophotometer für diskrete Wellenlängen, mit mehreren Strahlung emittierenden Dioden (2), die im wesentlichen monochromatische Strahlungen verschiedener Wellenlängen emittieren, einem Halter (1) zur Abstützung der Dioden (2), einer optischen Anordnung (5, 6), mit der die von den Dioden (2) emittierten Strahlungen sukzessive auf eine zu testende Probe (10) gelenkt werden, einem ersten Strahlungsdetektor (12), der die Intensität der von der Probe (10) reflektierten oder übertragenen Strahlung feststellt, und mit einer Signalverarbeitungseinheit, die an den ersten Strahlungsdetektor (12) angeschlossen ist, gekennzeichnet durch eine reflektierende Einrichtung (5) in der optischen Anordnung, die in bezug auf den Halter (1) drehbar getragen wird, eine Einrichtung zur Änderung der Winkelstellung der reflektierenden Einrichtung (5), um dadurch die Strahlung der Dioden (2) sukzessive auf die Probe (10) zu reflektieren, einen Umformer (30), der in wenigstens einer Winkelstellung der reflektierenden Einrichtung (5) ein Signal erzeugt, einen Strahlteiler (7), der vor der Probe (10) in der Bahn des auf die Probe (10) reflektierten Strahls angeordnet ist, einen zweiten Strahlungsdetektor (9), der die Intensität der Strahlung ermittelt, welche von dem Strahlteiler (7) abgelenkt wird, einen ersten Analog/Digital-Umwandler (17) zur Erzeugung eines digitalen Signals, das dem Signal des ersten Strahlungsdetektors (12) entspricht, einen zweiten Analog/Digital-Umwandler (16) zur Erzeugung eines digitalen Signals, das dem Signal des zweiten Strahlungsdetektors (9) entspricht, und durch eine Datenverarbeitungseinheit (18), die an den Ausgang des ersten und zweiten Analog/Digital-Umwandlers (17, 16) angeschlossen ist und das Datenspektrum auf der Basis der digitalen Signale des ersten und des zweiten Analog/Digital-Umwandlers (17, 16) und des Signals des Umformers (30) berechnet.

2. Spektrophotometer nach Anspruch 1, gekennzeichnet durch eine Einrichtung (3) zur Betätigung der Dioden (2) entsprechend der Winkelstellung der reflektierenden Einrichtung (5), wobei die Einrichtung (3) zur Betätigung der Dioden (2) an den Umformer (30) angeschlossen ist.

3. Spektrophotometer nach Anspruch 2, gekennzeichnet durch einen Schrittmotor (4) zum Drehen der reflektierenden Einrichtung (5), dessen Steuerausgang mit der Einrichtung (3) zur Betätigung der Dioden (2) verbunden ist.

4. Spektrophotometer nach Anspruch 1 oder 2, dadurch gekennzeichnet, daß der Umformer (30) ein signal erzeugt, das der augenblicklichen Winkelstellung der reflektierenden Einrichtung (5) entspricht, und daß die reflektierende Einrichtung (5) von einem Motor (4) kontinuierlich gedreht wird.

5. Spektrophotometer nach einem der Ansprüche 1—4, dadurch gekennzeichnet, daß die reflektierende Einrichtung aus wenigstens einem Spiegel (5) besteht.

6. Spektrophotometer nach Anspruch 2 oder 3, dadurch gekennzeichnet, daß die Einrichtung (3) zur Betätigung der Dioden (2) und die Datenverarbeitungseinheit (18) von einem Mikroprozessor gebildet werden.

7. Spektrophotometer nach einem der Ansprüche 1—6, dadurch gekennzeichnet, daß wenigstens einige der Dioden (2) mit Filter (13) versehen sind.

**Revendications**

1. Un spectrophotomètre fonctionnant à des longueurs d'ondes discrètes comportant plusieurs diodes d'émission de rayonnement (2) émettant des rayonnements sensiblement monochromatiques de différentes longueur d'onde, un support (1) destiné à supporter lesdites diodes (2), un agencement optique (5, 6) pour diriger le rayonnement émis par lesdites diodes (2) successivement vers un échantillon (10) à tester, un premier détecteur de radiation (12) détectant l'intensité du rayonnement réfléchi ou transmis par l'échantillon (10) et une unité de traitement de signal reliée au premier détecteur de rayonnement (12), caractérisé par des moyens de réflexion (5) dans ledit agencement optique, lesdits moyens de réflexion (5) étant montés rotatifs par rapport au support (1), des moyens pour changer la position angulaire des moyens de réflexion (5), de façon à réfléchir successivement le rayonnement desdites diodes (2) en direction de l'échantillon (10), un transducteur (30) pour fournir un signal dans au moins une position angulaire des moyens de réflexion (5), un éclateur ou diviseur de faisceau (7) disposé devant l'échantillon (10) sur le trajet du faisceau de rayonnement réfléchi en direction de l'échantillon (10), un second détecteur de rayonnement (9) captant l'intensité du rayonnement dévié par l'éclateur de faisceau (7), un premier convertisseur analogique-numérique (17) destiné à produire un signal numérique correspondant au signal du premier détecteur de rayonnement (12), un second convertisseur analogique-numérique (16) destiné à produire un signal numérique correspondant au signal du second détecteur de rayonnement (9) et une unité de traitement de données (18) reliée à la sortie du premier et du second convertisseurs analogiques–numériques (17, 16), ladite unité de traitement de données (18) calculant les données concernant le spectre sur la base des signaux numériques desdits premier et second convertisseurs analogiques-numériques (17, 16) et du signal dudit transducteur (30).

2. Le spectrophotomètre selon la revendication 1, comportant en outre des moyens (3) pour faire fonctionner lesdites diodes (2) en correspondance à la position angulaire desdits moyens de réflexion (5), lesdits moyens (3) pour faire fonctionner lesdites diodes (2) étant reliés au transducteur (30).

3. Le spectrophotomètre selon la revendication 2, comportant en outre un moteur pas-à-pas (4) pour faire tourner lesdits moyens de réflexion (5), dont l'entrée de contrôle est reliée auxdits moyens (3) pour faire fonctionner lesdites diodes (2).

4. Le spectrophotomètre selon la revendication 1 ou 2, dans lequel le transducteur (30) fournit un signal correspondant à la position angulaire courante desdits moyens de réflexion (5) et lesdits moyens de réflexion (5) sont entraînés en rotation de manière continue par un moteur (4).

5. Le spectrophotomètre selon l'une quelconque des revendications 1 à 4, dans lequel lesdits moyens de réflexion consistent en au moins un miroir (5).

6. Le spectrophotomètre selon la revendication 2 ou 3, dans lequel lesdits moyens (3) pour faire fonctionner lesdites diodes (2) et ladite unité de traitement de données (18) est un microprocesseur.

7. Le spectrophotomètre selon l'une quelconque des revendications 1 à 6, dans lequel au moins quelques unes desdites diodes (2) sont munies de filtres (13).